Europäisches Patentamt

European Patent Office

Office européen des brevets

(11) Publication number : **0 479 705 A2**

# (12) EUROPEAN PATENT APPLICATION

(21) Application number : **91500070.7**

(22) Date of filing : **27.06.91**

(51) Int. Cl.⁵ : **F16B 21/02, F16B 5/06**

(30) Priority : **03.10.90 ES 9002510**

(43) Date of publication of application :
**08.04.92 Bulletin 92/15**

(84) Designated Contracting States :
**AT BE CH DE DK FR GB GR IT LI LU NL SE**

(71) Applicant : **AMPER S.A.**
**Torrelaguna, 75**
**E-28027 Madrid (ES)**

(72) Inventor : **Vidal Peiro, José**
**Torrelaguna, 75**
**E-28027 Madrid (ES)**

(74) Representative : **Carpintero Lopez, Francisco**
**HERRERO & ASOCIADOS, S.L. Alcalá, 21**
**E-28014 Madrid (ES)**

(54) Fixing element for normalised rack-like mechanics.

(57)    Such element is divided into three constituent parts, parts (1) and (4) being a sort of clip designed to grip both sides of a plate (3) or element to be joined, and a shank (11) designed to be screwed to the other element to be joined (13), the shank (11) head (10) being insertable into the clip (1-4) by force, such head being blocked by the arms (8) provided in part (4), which is resiliently deformable radially.

These arms can, upon rotation of part (4) in respect of part (1), be caused or otherwise to face recesses (16) in part (1), thereby releasing such arms (8) for resilient deformation thereof, or locking the same to prevent the shank (11) head (10) from being removed.

FIG.-1

Jouve, 18, rue Saint-Denis, 75001 PARIS

## OBJECT OF THE INVENTION

The present invention relates to a fixing element specifically designed to be used in rack-like mechanics, for instance in panelling furniture structures for electronic equipment, paneling the insides of racks in sub-rack format modular plates and others, for instance ventilation fronts, ornamental plates, and so forth, in systems for quick-fitting of panels, bracing mid-points for accessories in rack-like mechanics, or mechanics using similar perforations, in the fixing of elements to guide or lead wires through rack mechanics, in unions of parts to each other to form frameworks, boxes, etc.

The object of the invention lies in fixing being quick, reliable and efficient, with two options for release, one merely by force and the other by force and rotation.

## BACKGROUND OF THE INVENTION

Nowadays, rivets or screws are used when it comes to fixing one or more plates, for instance printed circuit plates, to a frame or support, which rivets are inadequate when such plates are to be taken off for maintenance purposes.

Of the fixing system using screws, one of the solutions most widely used comprises using threaded screws, but this means that handling is very slow and the hole housing the screw is gradually deteriorated with the attachment being finally rendered useless.

To solve this, screws with a nut are used, but this renders assembly and dismantling far slower, with a high risk of losing the nuts, which could also happen with the nuts falling on inaccessible areas, where such nuts can cause short circuits or other faults deriving from the metallic nature thereof.

## DESCRIPTION OF THE INVENTION

The device subject hereof actually comprises the functional combination of three parts, two of which form a sort of double clip, to allow, on the one hand the fixing thereof to a panel and on the other the fixing of the third part to such parts, said third part actually being a shank with a threaded neck for the part itself to be fixed to the said element to which such panel must be joined, or otherwise, and with an expanded round head through which it is locked to the other two parts.

More specifically, one of the two parts making up the clip is a sort of ring in which the other part of the clip is insertable, having a pair of parallel arms, diametrically opposed to each other in respect of the shaft thereof, resiliently deformable and capped by locking spears, such internal part moreover having a second pair of shorter arms, at a right angle to the foregoing. that are locking elements for the metallic shank's head.

As aforesaid, the two parts making up the clip are fitted to a panel, adjusting to opposite surfaces thereof, with the part having the aforesaid arms passing through a hole operatively provided therein, and the metallic shank, and hence the element associated thereto, is fixed to the same by force, specifically by resiliently deforming the pair of shorter arms in the clip's internal part.

Furthermore, and as another feature of the invention, the annular part can take up two positions in respect of the part it houses inside the same, specifically in respect of the latter's arms that are to grip the metallic shank's head, in turn having two different diameters, so that in a position it allows the said arms to be radially and resiliently deformed, for insertion/ removal of the metallic shank's head, while in the other position it is closely fitted to the external surface of the shorter arms, thereby to prevent their resilient deformation and, hence, likewise preventing uncoupling of the metallic shank unless a part of the clip is rotated over a right angle with regard to the other.

## DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is an axial view of the internal surface of the annular part with which the clip is provided.

Figure 2. - Is an axial view of the opposite surface of the part shown in the above figure.

Figure 3.- Is a side elevation and semi-sectional view along line A-B of figure 2.

Figure 4.- Is another side elevation and semi-sectional view along line C-D of figure 2.

Figure 5. - Is an axial view of the other part making up the clip.

Figure 6. - Is an axial view of this second part, from an angle opposite the one of figure 5.

Figure 7.- Is a section along line E-F of figure 6.

Figure 8.- Is yet another section, along line G-H of figure 6.

Figure 9.- Is a side elevation view of the third part, viz. the metallic shank.

Figure 10. - Is a side elevation diagrammatic representation of all the parts shown in the previous figures, duly associated to the elements to be joined, and with the same uncoupled.

Figure 11. - Is a front view of the assembly shown in the previous figure, with the rotary part of the clip in the uncoupled position of the metallic shank by pulling.

Figure 12. - Is a representation like the above, but in the rotary part position where the said metallic shank is totally blocked.

Figure 13. - Is a side elevation and sectional view of the fixing element as a whole.

Figure 14. - Is another section of the assembly, like the one before, but at a right angle in respect thereof, showing the blocking means for the metallic shank, and in a position such that the said shank can be inserted and removed by force.

Figure 15. - Is, finally, a quarter section as in the above figure, with the parts making up the clip in total blocking position for the said shank.

## PREFERRED EMBODIMENT OF THE INVENTION

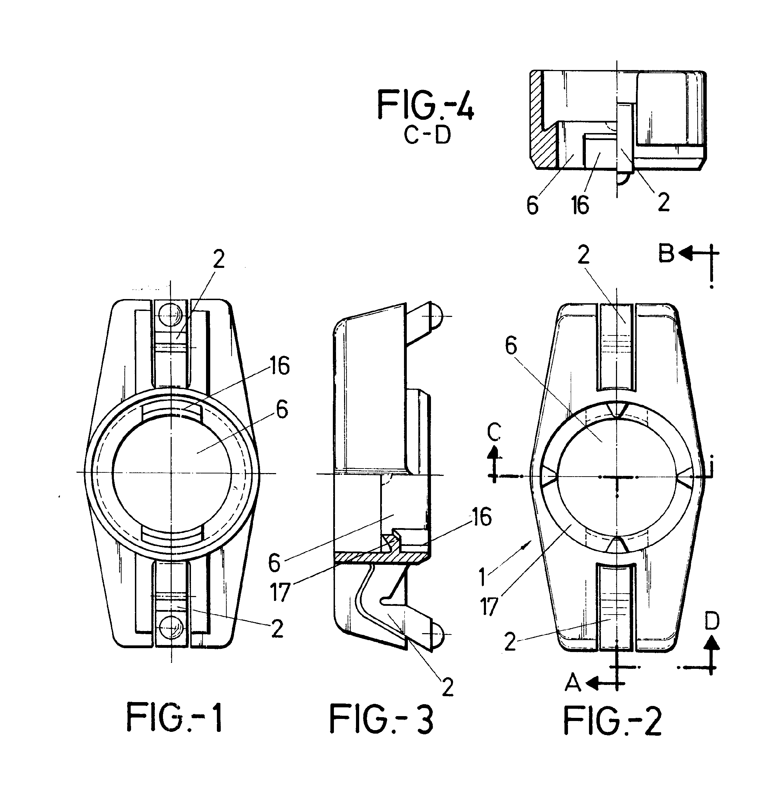

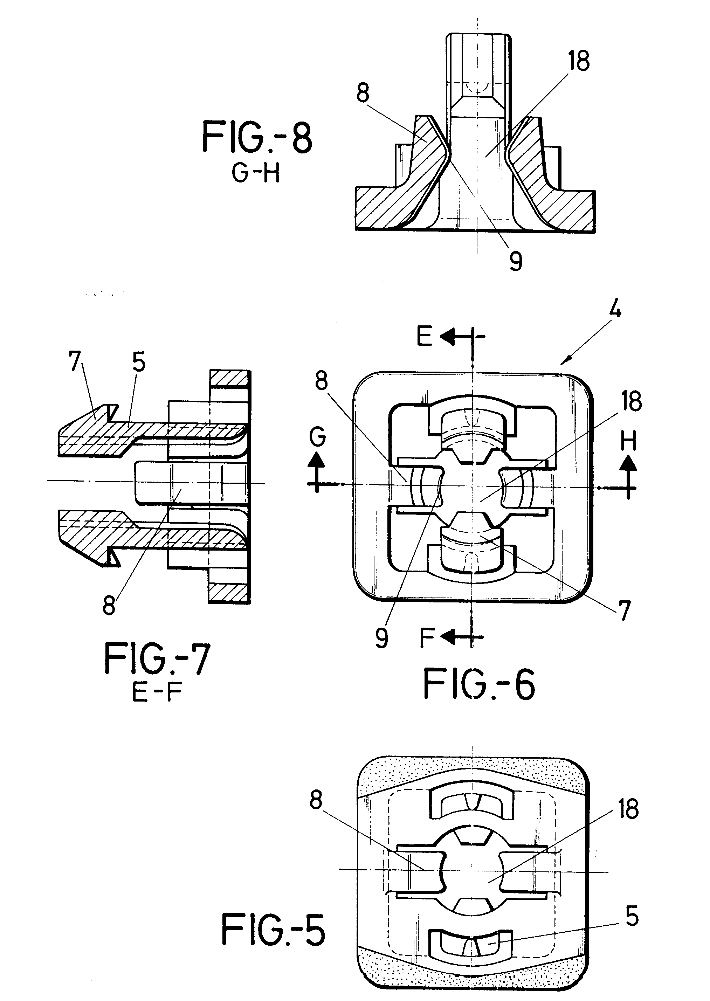

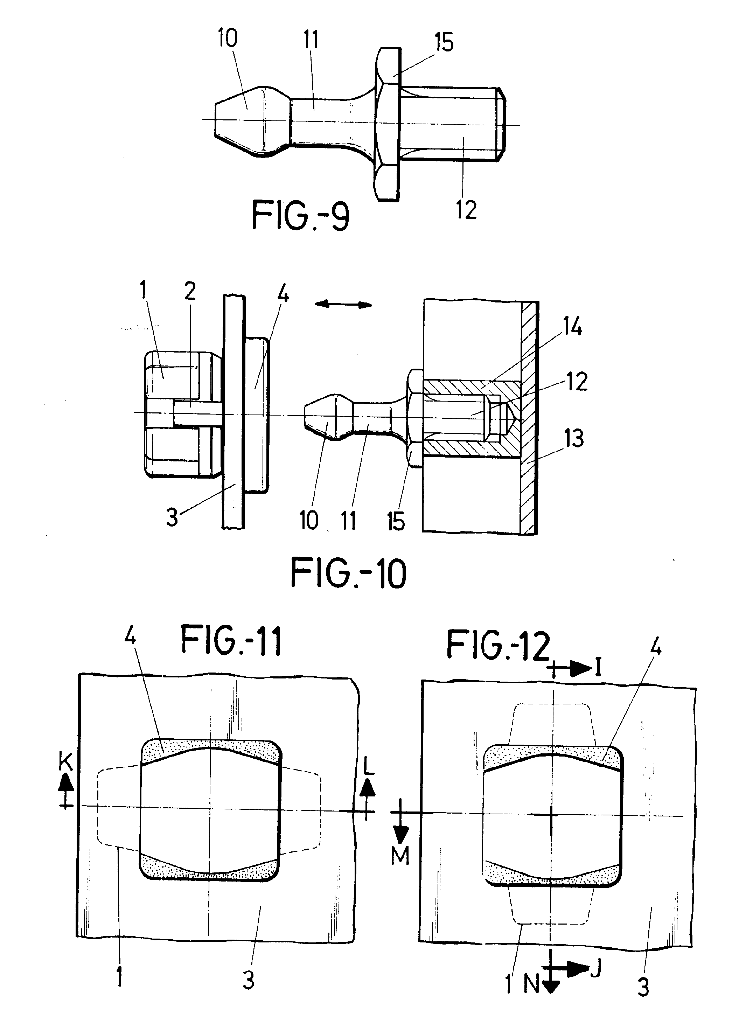

These figures clearly show that the fixing element or device subject hereof, as aforesaid, comprises three basic parts, as shown in figures 1 to 4, figures 5 to 8 and figure 9. One of these parts, numbered (1), is a sort of ring with a pair of pins (2) opposite each other, designed to expedite adjustment thereof to the plate or panel (3) to which such part is to be fixed, together with a second part (4) forming a sort of clip with the first part gripping the panel (3), as specifically shown in figure 10, which part (4) has a pair of arms (5) parallel to the axis thereof and symmetrical in respect thereof, designed to pass through a hole in the plate (3) and be coupled to the hole (6) in part (1), to which end such arms are capped by two locking shears (7), clearly shown in figure 7, which arms (5) can obviously be resiliently deformed, specifically because of the resilience of the constituent material of both this part (4) and part (1).

Part (4) is further provided, parallel and at a right angle to the arms (5), with two other shorter arms (8) with internal dihedral and obtuse chokes (9) designed to hold the round head (10) and the metal shank (11) that makes up the third and last part, which shank has a threaded neck (12) for fixing thereof to the element (13) that is to be removably joined to the plate (3), as shown in the said figure 10, and to which end such element (13) will have an internally threaded socket (14) at the neck (12), such shank (11) being moreover provided with a polygonal nut-like flange (15) expediting screwing thereof.

To complete the structure being described, and as an essential feature of the invention, the hole (6) in the annular part (1) has two recesses (16) diametrically opposed to each other, specifically provided in an internal ring (17), which ring clamps the shorter arms (8) of part (4) and acts as locking means for such arms (8), preventing resilient deformation thereof and hence insertion or removal of the shank (11) head (10), unless part (1) is rotated in respect of part (4) to a position where the said arms (8) face the recesses (16) provided in the ring (17), in which position the said recesses allow the said resilient deformation of the arms (8) and hence axial displacement of the shank (11) in either direction, by resilient deformation of such arms and temporary widening of the aperture (18) defined therebetween.

Thus, elements (3) and (13) can be coupled or uncoupled by merely pressing one against the other, in a given relative position of parts (1) and (4), where the arms (8) of part (4) face the recesses (16) in part (1), or are otherwise locked to each other when the said arms (8) are out of step as regards the lateral recesses (16) in hole (6) and, hence, the external surface of the said arms comes into close contact with the internal ring (17) disposed inside the hole (6), such ring preventing deformation thereof.

The device's operation as described can be more clearly observed in figures 11 through to 15.

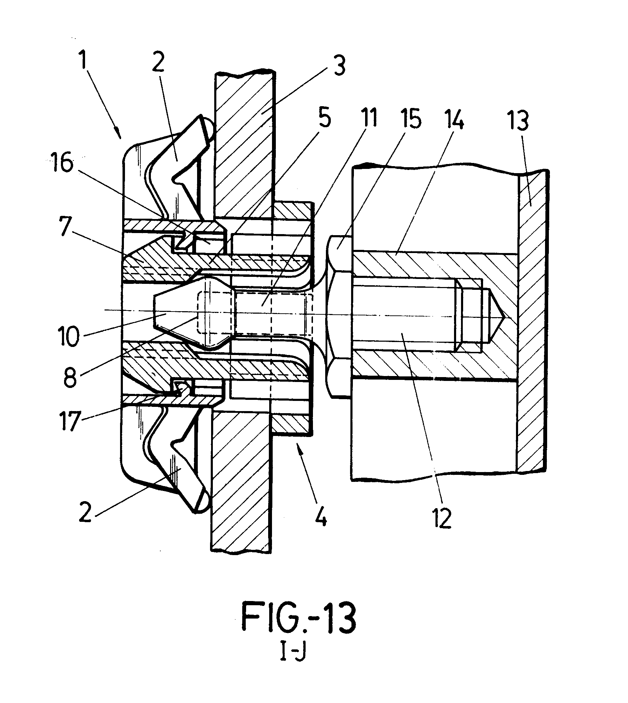

Parts (1) and (4) are locked to each other (see figure 13) because the shears (7) in arms (5) engage the upper edge of the internal ring (17).

This engagement, as also shown, takes place through a hole provided in the panel (3) to be fitted, such panel therefore being blocked between parts (1) and (4), thereby for the three elements of the assembly to be relatively blocked, as a result of the pressure exerted by the pins (2), due to resilient deformation, on the panel (3), and the latter on the base of part (4).

The assembly thus formed is then inserted on the shank (11), threaded to element (13) that is to support the panel, the expanded head (10) thereof being held by the internal chokes (9) in arms (8) after the latter have been resiliently deformed outwardly, to allow passage of such head.

Passage of the shank (11) head (10) between arms (8) is only possible when parts (1) to (4) take up a given relative position, of the two options available.

Figures 11 and 12 respectively show the two optional positions.

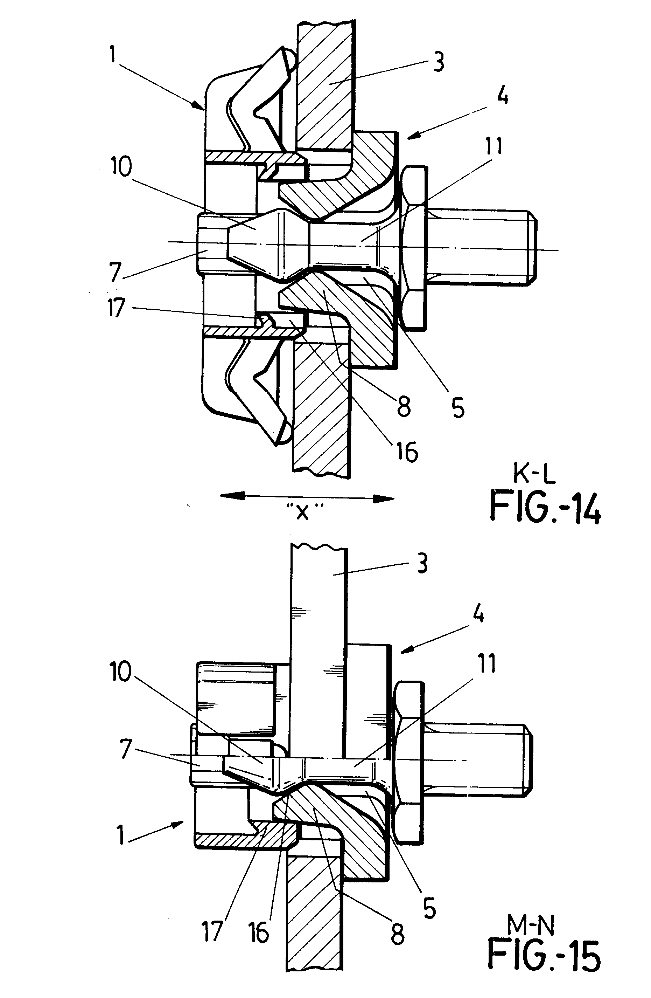

In the position shown in figure 11, of which a sectional view along line K-L is provided in figure 14, the relative position is such that the arms (8) in part (4) face the recesses (16) provided in the inwall of internal ring (17) in part (1).

In such position, if the assembly comprising parts (1), (4) and (3), locked to each other, as we have already seen, is pulled in either of the "x" directions, the head (1) will push arms (8) out, these latter moving into the recesses (16), thereby to allow coupling and uncoupling.

If, however, part (1) is rotated over a right angle as regards part (4), as shown in figure 12, a semi-sectional view of which is shown in figure 15 along line M-N and a full sectional view in figure 13 along line I-J, the internal ring's (17) recesses (16) will also be at a right angle to the arms (8), which means that such arms , as is best seen in figure 15, face the inwall of the ring and cannot hence open to allow passage of the head (10).

In light of the foregoing, it is clear that the device provides a fast coupling and uncoupling of elements (3) and (13), merely by pressure, when parts (1) and (4) take up the positions of figures 11 and 14, or an immovable coupling by accident or otherwise, when the said parts are rotated to the position of figures 12, 13 and 15.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1.- Fixing element for normalised rack-like mechanics, essentially characterised in comprising the functional combination of three parts, two of which make up a sort of clip designed to be fixed to both surfaces of a plate or element to be joined, while the other is in turn designed to be threadedly fixed to the other element to be joined, this latter actually being a metallic shank provided at one of its ends with a threaded neck that is to be fixed to the said element, its other end having an expanded round head that is to be fixed to the two parts making up the clip, while one of these latter comprises a ring that can house a pair of resiliently deformable arms provided in the other and in turn passing through a hole that is operatively provided in the plate or element to be joined, this pair of arms ending in the same number of locking spears that engage the annular part, a second pair of arms being further provided in this second part, defining an internal choke for the passage of the metallic shank and acting as holding means for the latter's expanded head, which is coupled/uncoupled by pressure by resilient deformation of such arms, afforded by the plastic material of which the two parts of the clip are made.

2.- Fixing element for normalised rack-like mechanics, as in claim 1, characterised in that the central hole in the annular part has two diametrically opposed expansions that can face the shorter arms of the second part of the clip, allowing the same to be resiliently deformed for insertion/removal of the metallic shank's head, and both parts of the clip being rotatable in respect of each other, so that when the latter's shorter arms are out of step with regard to the lateral expansions of the former's hole, such arms contact directly with the wall of the hole in the ring, thereby to prevent radial deformation thereof and, hence, blocking the expanded head of the metallic rod in the coupled position thereof.

FIG.-4
C-D

6    16    2

2    B

2    6

16    C

6

6

17    16

1

17

2    A    D

FIG.-1    FIG.-3    FIG.-2

EP 0 479 705 A2

FIG.-8
G-H

8
18
9

FIG.-7
E-F

7
5
8

4
E
G
8
9
18
H
7
F

FIG.-6

FIG.-5

8
18
5

6

FIG.-9

FIG.-10

FIG.-11

FIG.-12

FIG.-13
I-J

1
3
4
10
11
7
17
8
5
16

"x"

K-L
FIG.-14

3
4
10
11
7
1
5
17    16    8

M-N
FIG.-15